# EUROPÄISCHE PATENTSCHRIFT

(11) **EP 1 642 035 B1**
(45) Veröffentlichungstag und Bekanntmachung des Hinweises auf die Patenterteilung: **05.11.2008**
(21) Anmeldenummer: 04729088.7
(22) Anmeldetag: 23.04.2004
(51) Int. Cl.: F15B 11/028, F15B 21/08, F15B 11/16, A01B 63/10

(54) **HYDRAULISCHES SYSTEM**
HYDRAULIC SYSTEM
SYSTEME HYDRAULIQUE

(30) Priorität: 09.07.2003 DE 10330869
(43) Veröffentlichungstag der Anmeldung: 05.04.2006
(73) Patentinhaber: Hydac System GmbH, 66280 Sulzbach/Saar (DE)
(72) Erfinder: SCHOLL, Josef, 66636 Tholey (DE); HUTH, Heinz-Peter, 66802 Überherrn (DE)
(74) Vertreter: Bartels, Martin Erich Arthur
(86) Internationale Anmeldenummer: PCT/EP2004/004305
(87) Internationale Veröffentlichungsnummer: WO 2005/005842

(56) Entgegenhaltungen:
- EP-A- 1 270 954
- EP-A- 1 281 872
- DE-A- 4 407 370
- GB-A- 2 298 291
- US-A- 4 915 014

## Beschreibung

Eine wesentliche Aufgabe von hydraulischen Systemen ist es, neben der Rotationsbewegung von Hydromotoren in zwei Antriebsrichtungen die gegenläufige Linearbewegung von hydraulischen Arbeitszylindern als Antriebsteil sinnfällig anzusteuern. Die Zylinderbewegung kann man dabei in drei Grundfunktionen einteilen, nämlich Zylinder ausfahren, Zylinder einfahren und die jeweilige Zylinderposition zu halten. Eine vierte mögliche Zylinderbewegung stellt die sogenannte Schwimmstellung dar, die häufig im Bereich von Landmaschinen zum Einsatz kommt. In der Schwimmstellung ist es möglich, eine Arbeitsgerätschaft einer Arbeitsmaschine beispielsweise in Form eines Traktors mit dem Eigengewicht auf dem Boden aufliegen zu lassen, um dergestalt eine Bearbeitung wie Pflügen und Mähen oder dergleichen durchzuführen.

Neben diesen genannten Grundfunktionen gibt es für das hydraulische System je nach Einsatz eine Vielzahl von Sonderanforderungen zu erfüllen, unter anderem leckölfreies Halten, Beherrschung von ziehenden bzw. wechselnden Lasten am Arbeitszylinder, Durchführen einer Druck- bzw. Kraftregelung (-steuerung) für die eingesetzten hydraulischen Arbeitszylinder. Zur Erfüllung der Grundfunktionen dienen regelmäßig konventionelle Wegeschaltventile, und für die Sonderfunktion werden zusätzliche Ventile notwendig wie Sperrplatten, entsperrbare Rückschlagventile, Senkbremsventile und vergleichbare Einrichtungen. Neben diesen Zusatzventilen wird zur Realisierung der Grundfunktionen, der Hauptsteuerkolben im Wegeventil auf den jeweiligen Einsatzfall entsprechend angepaßt. So wird die Geometrie der Steuerkanten am Hauptsteuerkolben, zumindest teilweise an die zu beherrschende Zylindergröße des Arbeitszylinders angepaßt. Die dahingehend speziell adaptierten Heben- und Senkensteuerkanten sind notwendig, da der zu beherrschende Volumenstrom aus dem Öffnungsquerschnitt an der Steuerkante und dem Druckgefälle über dieser Steuerkante entsteht.

Der genannte Öffnungsquerschnitt wird über die Steuerkantenausführungen und die Kolbenposition bestimmt, wobei bei heute üblichen auf diesem Gebiet eingesetzten Ventilen, die Heben- und Senkensteuerkante über einen Kolben realisiert ist. Somit besteht eine feste Zuordnung zwischen den beiden Öffnungsquerschnitten, erzeugt durch die jeweilige Steuerkante des Hauptsteuerkolbens. Darüber hinaus werden auch hydraulische Systeme angeboten mit Ventilkonzepten, die über zwei getrennte Steuerkolben verfügen. Bei den dahingehend bekannten Lösungen besteht dann kein fester Zusammenhang mehr zwischen den beiden Öffnungsquerschnitten, und beide Kolben können voneinander unabhängig angesteuert werden, um dergestalt zu entsprechenden Öffnungsquerschnitten zu gelangen.

Das Druckgefälle ist wiederum abhängig von der jeweiligen Last am Zylinder. Bei Ventilen mit sogenannter Load-Sensing-Funktion (OC-LS, CC-LS) wird das Druckgefälle über der Hebensteuerkante auf einen festen Wert (8 bis 15 bar, je nach Ventilausführung) geregelt. Hierfür sind zusätzliche sogenannte Druckwaagen erforderlich. Über die Senkensteuerkante ist das Druckgefälle dann unbestimmt. Eine weitere Lösungsvariante bildet das sogenannte LUDV (Lastunabhängige Durchflussversorgung) Ventilkonzept. Hierbei wird über eine entsprechend angeordnete Druckwaage das Druckgefälle über der Hebensteuerkante so geregelt, dass alle Verbraucher mit einer entsprechenden Fluid- bzw. Ölmenge versorgt werden. Auch wenn alle Verbraucher in Summe eine Ölmenge über der Pumpenkapazität der Versorgungspumpe anfordern, regelt dieses Konzept jedem Verbraucher eine entsprechende Teilmenge zu.

Nachteile der bekannten hydraulischen Systeme sind mithin die bei Sonderanforderungen zusätzlich notwendigen Ventile, dass der Ventilkolben mit seinen Steuerkanten funktionsspezifisch auszuführen ist, was mit einem entsprechenden Planungs- und Kostenaufwand einhergeht, dass ein fester nicht änderbarer Zusammenhang zwischen Heben- und Senkenquerschnitt gegeben ist, so dass für jeden Anwendungsfall ein definiertes Kolbenkonzept zu erstellen ist, sowie dass über die Steuerkanten des Hauptsteuerkolbens es zu Druckgefällesituationen kommt, die entweder unbestimmt sind oder nur fest vorgegebene Werte erreichen. Die beschriebenen Nachteile führen dazu, dass die bekannten hydraulischen Systeme in ihrer Ansprechzeit träge reagieren, teilweise hohe Verlustleistungen aufweisen sowie störanfällig sind.

Durch die EP 1 270 954 A ist ein Verfahren zur Ermittlung des Betätigungsdruckes eines druckmittelbetätigbaren Stellzylinders bekannt, welcher infolge einer Beaufschlagung mit dem Betätigungsdruck um einen vorgebbaren Stellweg ausführt, wobei an einer Stelle einer den Stellzylinder mit dem Druckmittel versorgenden Leitung ein Drucksensor einen Zuflußdruck ermittelt. Dadurch, dass der Betätigungsdruck unter Verwendung der durch den Betätigungsdruck bewirkten Änderung des Stellweges rechnerisch aus dem Zuflußdruck ermittelt wird, läßt sich hieraus eine höhere Genauigkeit im Rahmen des zu ermittelnden Betätigungsdruckes erreichen. Das dahingehende Verfahren findet bevorzugt Anwendung für hydraulisch gesteuerte, automatisierte Schaltgetriebe für Kraftfahrzeuge.

Durch die DE 44 07 370 A ist ein gattungsgemäßes hydraulisches System bekannt mit einem hydraulisch ansteuerbaren Antriebsteil mit zwei gegenläufigen Antriebsrichtungen, wobei für mindestens eine Antriebsrichtung mindestens ein Druckregler, insbesondere in Ventilform, vorgesehen ist sowie eine Drossel zwischen dem Druckregler und dem Antriebsteil, wobei zur Erkennung des Lastzustandes des Antriebsteils eine Sensorik vorgesehen ist für die Überwachung der bewegbaren Komponenten des Antriebsteils. Mit der bekannten Lösung ist eine Einrichtung zur Steuerung und Überwachung eines hydraulischen Arbeitsdruckes eines Spannzylinders geschaffen, bei der das ungewollte Ansprechen einer Schaltvorrichtung zum Überwachen des minimalen Spanndruckes während des Verfahrens des Spannzylinders verhindert wird.

Ausgehend von diesem Stand der Technik liegt der Erfindung die Aufgabe zugrunde, ein hydraulisches System mit einem hydraulisch ansteuerbaren Antriebsteil mit zwei gegenläufigen Antriebsrichtungen zu schaffen, das die beschriebenen Nachteile nicht aufweist, insbesondere zu hohen Reaktionszeiten des Systems führt bei Reduzierung der Verlustleistung sowie der Störanfälligkeit. Eine dahingehende Aufgabe löst ein hydraulisches System mit den Merkmalen des Patentanspruches 1 in seiner Gesamtheit.

Dadurch, dass das hydraulische System gemäß der erfindungsgemäßen Lösung vorsieht, dass der Druckaufnehmer die momentane Lastsituation am Antriebsteil erfaßt, dass der Druckregler in seiner Grundstellung die Sekundärseite des Systems mit einem Tankverschluß verbindet, und dass bei Ansteuerung des Druckreglers der Sekundärdruck auf den Druck der proportionalen Vorsteuerung abzüglich der am Ventilkolben des Druckreglers angreifenden Federkraft geregelt ist, ist in vorteilhafter Weise ein Steuerungs- und Regelungskonzept realisiert, mit dem basierend auf dem beschriebenen Grundsystem sich für hydraulisch ansteuerbare Antriebsteile, wie hydraulische Arbeitszylinder oder Hydroantriebsmotoren, eine Druck-, Wege-, Geschwindigkeits- und Positionserfassung für die bewegbaren Komponenten des jeweiligen gewählten Antriebsteiles erreichen läßt. Über den jeweiligen Druckregler, insbesondere in Ventilform, lassen sich in hohem Maße dynamische und genaue Ansteuerungsvorgänge je nach hydraulischem Anwendungsfall realisieren. Mit dem erfindungsgemäßen hydraulischen System unter Verwendung von Druckreglern und entsprechenden Drosseln kann auf die bisher bekannte übliche Wegeventiltechnik zum Ansteuern der Bewegung eines Antriebsteiles verzichtet werden, so dass die Verlustleistung und die Störanfälligkeit reduziert ist bei gleichzeitiger Erhöhung der Reaktionszeit für das hydraulische System.

Bei einer bevorzugten Ausführungsform des erfindungsgemäßen hydraulischen Systems weist die Drossel einen fest oder variabel vorgebbaren Verlustwiderstand auf, wobei die Drossel aus einem vorgebbaren Leitungsquerschnitt, dem freien Querschnitt eines Schaltventiles in seiner Durchlaßstellung oder aus einer Einstelldrossel mit veränderbarem Querschnitt gebildet ist. Vorzugsweise ist dabei ferner vorgesehen, dass der Druckregler aus einem Druckminderventil mit einer Sekundärdruckbegrenzung gebildet ist, wobei der Druckregler vorzugsweise ein Dreiwege-Druckminder-Ventil ist. In Abhängigkeit des jeweiligen Anwendungsfalles für das hydraulische System kann über die Drossel beispielsweise mit einem fest vorgebbaren Verlustwiderstand, gebildet aus einem vorgebbaren Leitungsquerschnitt ein vereinfachtes Steuerungs- und Regelungskonzept realisiert werden, das beispielsweise verwendbar ist, sofern man nur die Lage der bewegbaren Komponenten des jeweiligen Antriebsteiles überwachen möchte. Durch den Einsatz von Drosseln mit variabel vorgebbarem Verlustwiderstand, beispielsweise in Form einer üblichen Einstelldrossel hingegen, lassen sich auch aufwendigere Steuerungs- und Regelungskonzepte realisieren, beispielsweise die Geschwindigkeits- oder die Drucküberwachung für die bewegbaren Komponenten des jeweiligen Antriebsteiles.

Weitere vorteilhafte Ausführungsformen des erfindungsgemäßen hydraulischen Systems sind Gegenstand der weiteren Unteransprüche.

Im Folgenden wird das erfindungsgemäße hydraulische System anhand verschiedener Ausführungsbeispiele nach der Zeichnung näher erläutert. Dabei zeigen in prinzipieller und nicht maßstäblicher Darstellung die Figuren in der Art von Schaltplänen verschiedene Lösungsvarianten für ein hydraulisches System. Dabei zeigt die
- Fig. 1: eine bekannte Ausführungsform eines hydraulischen Systems;
- Fig. 2: eine geänderte, bekannte Ausführungsform des hydraulischen Systems nach der Fig. 1;
- Fig. 3: eine erste erfindungsgemäße Ausführungsform für das hydraulische System; und die
- Fig. 4 und Fig. 5: weitere Ausführungssbeispiele für die in Fig. 3 gezeigte erfindungsgemäße Ausführungsform des hydraulischen Systems.

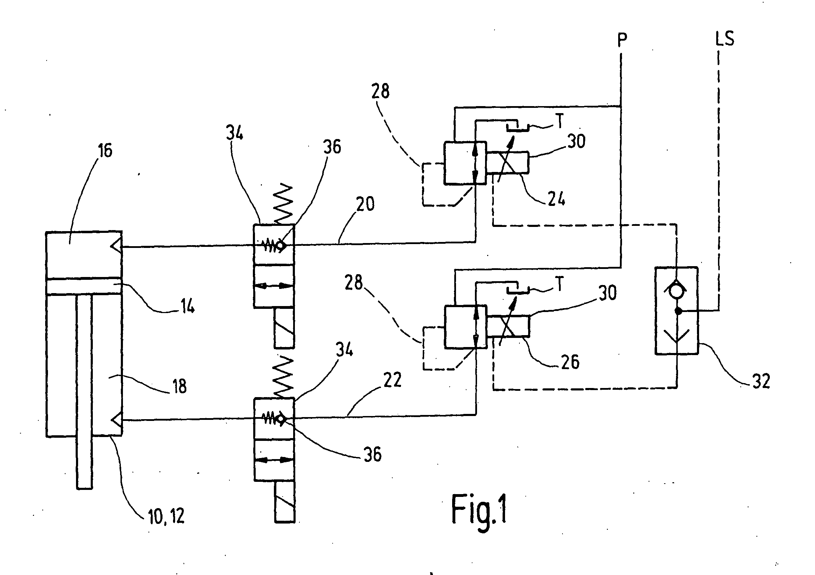

Die den Stand der Technik betreffende Fig. 1 zeigt in prinzipieller Schaltdarstellung ein hydraulisches System mit einem hydraulisch ansteuerbaren Antriebsteil 10, in Form eines üblichen Hydro- oder Arbeitszylinders 12, mit einer Kolbenstangeneinheit 14. Die dahingehende Einheit 14 unterteilt den Arbeitszylinder 12 in zwei Fluidarbeitsräume 16, 18. In Abhängigkeit des Befüllungszustandes an Fluid in den beiden Arbeitsräumen 16 und 18 fährt die Kolbenstangeneinheit 14 aus oder ein, so dass dergestalt zwei gegenläufige Antriebsrichtungen realisiert sind. In der vorliegenden bekannten Ausführungsform ist jeder Antriebsrichtung und mithin jedem fluidführenden Antriebstrang 20, 22 ein Druckregler in Ventilform 24, 26 zugeordnet. Jeder Druckregler 24, 26 ist auf seiner Eingangsseite einmal an eine Hydropumpe P angeschlossen sowie an einen Tank T. Auf der Ausgangsseite des jeweiligen Druckreglers 24, 26 wird der anstehende Fluiddruck abgegriffen und über eine Steuerleitung 28 dem jeweiligen Ventil als Druckregler zugeführt. Der jeweilige Druckregler 24, 26 ist über eine hydraulische Proportional-Steuereinrichtung 30 ansteuerbar, die über ein Wechselventil 32 an ein Load-Sensing-System LS angeschlossen ist. Des weiteren befindet sich zwischen dem jeweiligen Druckregler 24, 26 und dem Arbeitszylinder 12 in den Antriebsstrang 20, 22 geschaltet, ein elektromagnetisch betätigbares 2/2-Wegeschaltventil 34, das in der nicht durchgeschalteten Stellung jeweils ein Rückschlagventil 36 aufweist, das federbelastet in Richtung des jeweiligen Arbeitsraumes 16, 18 hin öffnet.

Der dahingehend bekannte Schaltaufbau für ein hydraulisches System soll nunmehr anhand einer Bodendruckentlastung für eine Arbeitsmaschine, beispielsweise in Form eines Traktors (nicht dargestellt), näher erläutert werden, wobei das Antriebsteil 10 bzw. der Arbeitszylinder 12 dazu dient, die Bodengerätschaft, beispielsweise in Form eines Pfluges, einer Egge oder dergleichen, die an der Arbeitsmaschine (Traktor) angebracht ist, anzusteuern. Durch den gezeigten bekannten Aufbau nach der Fig. 1 hat man eine sehr gute und konstruktiv einfache Druckregelung für die Arbeitsgerätschaft geschaffen, mit der es möglich ist über den Arbeitszylinder 12 die Höhe der Arbeitsgerätschaft relativ zum zu bearbeitenden Boden einzustellen und auch die Kraft oder den Weg vorzugeben, inwieweit die Arbeitsgerätschaft in den zu bearbeitenden Boden für eine Bearbeitung einzudringen hat. Um dies zu erreichen ist neben der eigentlichen Druckregelung auch eine Wegregelung über den jeweiligen Druckregler 24, 26 erreicht, wozu vorzugsweise ein nicht näher dargestellter Winkelsensor als Wegsensor ein der Zylinderposition des Arbeitszylinders 12 proportionales Steuersignal abgibt. Mit dem genannten proportionalen Wegsignal ist es möglich, die nachfolgend beschriebenen Funktionen mit dem hydraulischen System zu realisieren, wobei eine Bedienperson der Arbeitsgerätschaft noch die Möglichkeit hat, über ein nicht näher dargestelltes Bedienteil die Geschwindigkeit für das hydraulische System vorzugeben.

Soll mit der Arbeitsgerätschaft eine Bodendruckentlastung vorgenommen werden, kann ein über das Bedienteil vorgegebener Druckwert am ersten Druckregler 26 (Entlastungsregler) eingestellt werden, und zwar über die Steuereinrichtung 30, so dass die Bodenunebenheiten über den hydraulischen Regler 26 ausgeglichen werden können. Der weitere zweite Druckregler 24 dient dann als weitere Druckregelung im Sinne einer Bodendruckbelastung, bei der die Kolbenstangeneinheit 14 aus dem Arbeitszylinder 12 ausfährt. Dabei wird wiederum ein über das Bedienteil vorgegebener Druck am hydraulischen Regler (Belastungsregler) 24 eingestellt, und durch eine sinnfällige Kombination der End- und Belastungsvorgaben an beiden Druckreglern 24, 26 läßt sich dergestalt ein funktionssicherer, der Umgebung angepaßter Betrieb mit der Arbeitsgerätschaft durchführen, wobei es die bereits angesprochene Wege-Regelung erlaubt, im Sinne des Einhaltens einer vorgebbaren Arbeitsposition den Arbeitszylinder 12 auf eine über das Bedienteil vorgegebenen Position festzulegen. Die dahingehende Wege-Regelung kann auch vergleichbar der Vorgabe einer Transportstellung für die Arbeitsgerätschaft dienen, bei der diese vom Boden mit sicherem Abstand abgehoben dem An- und Abtransport der Arbeitsgerätschaft über die Arbeitsmaschine dient.

Zur Realisierung der sogenannten Schwimmstellung für die Arbeitsgerätschaft werden beide Druckregler 24, 26 auf den Druckwert 0 eingestellt, so dass der Arbeitszylinder 12 mit seiner Kolbenstangeneinheit 14 beidseitig, also nach beiden Antriebsrichtungen hin auf den Tank T entlastet ist und damit druck- bzw. kraftlos den Bodenunebenheiten folgen kann. In diesem Fall liegt das Arbeitsgerät nur noch mit dem Eigengewicht auf dem zu behandelnden Boden auf. Unabhängig hiervon hat jedenfalls die Bedienperson die Möglichkeit, den aufgezeigten Automatikbetrieb in Form einer Wegregelung und/oder Druckregelung zu übersteuern und den Arbeitszylinder 12 gemäß manuellen Vorgaben zu bewegen und mithin die Arbeitsgerätschaft. Bei dem vorliegenden Ausführungsbeispiel ist die Drossel 38 vorrangig durch den freien Querschnitt des Schaltventiles 34 vorgegeben und zwar einmal in seiner Durchlaßstellung und einmal in Abhängigkeit des variablen Öffnungsquerschnittes über das Rückschlagventil 36. Ferner ist die Drossel 38 mit ihrem fest vorgebbaren Verlustwiderstand durch den vorgebbaren Leitungsquerschnitt in den beiden Antriebssträngen 20, 22 vorgegeben.

In Abänderung der bekannten Ausführungsform nach der Fig. 1 kann der Arbeitszylinder 16 auch durch ein anderes Antriebsteil 10 gebildet sein, beispielsweise in Form eines nicht näher dargestellten Hydroantriebsmotores mit zwei gegenläufigen Dreh- oder Antriebsrichtungen. Ferner kann es für bestimmte Ausführungsformen genügen nur für einen Antriebsstrang 20 oder 22 des jeweiligen Antriebsteiles 10 den Druckregler nebst Drossel vorzusehen.

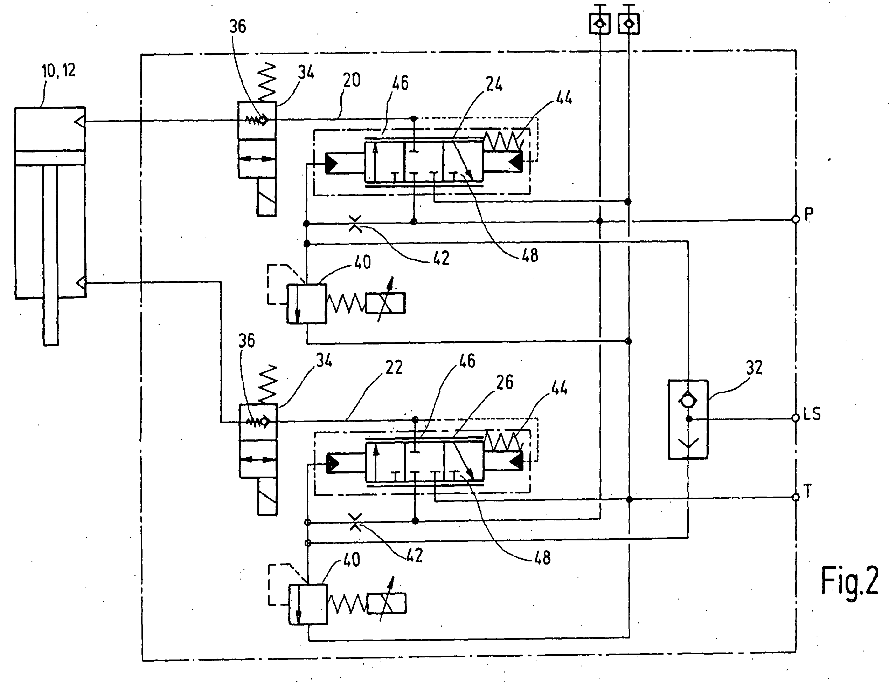

Die geänderte zum Stand der Technik gehörende Ausführungsform nach der Fig. 2 entspricht weitgehend der Ausführungsform nach der Fig. 1, so dass insoweit für die gleichen Bauteile auch die selben Bezeichnungen wie bei dem Ausführungsbeispiel nach der Fig. 1 verwendet werden. Die Schaltung ist entsprechend der Ausführungsform nach der Fig. 1 aufgebaut, wobei als Druckregler 24, 26 jeweils ein sogenanntes Druckminderventil mit einer Sekundärdruckbegrenzung eingesetzt wird und der Druckregler 24, 26 ist vorzugsweise in Form eines Dreiwege-Druckminderventils mit drei Schaltstellungen ausgebildet. In der in der Fig. 2 gezeigten mittleren Schaltstellung sind die fluidführenden Anschlüsse an den jeweiligen Druckregler 24, 26 gesperrt. Zur Ansteuerung des jeweiligen Druckreglers 24, 26 dienen Proportional-Druckbegrenzungs-ventile 40, die in vorgebbarer Weise elektrisch ansteuerbar sind. Des weiteren ist das jeweilige Proportional-Druckbegrenzungsventil 40 ausgangsseitig an ein Wechselventil 32 des Load-Sensing-Systems angeschlossen und des weiteren über eine Blende 42 mit einem Eingang des jeweiligen Druckreglers 24, 26 verbunden. Ausgangseitig ist das jeweilige Proportional-Druckbegrenzungsventil 40 auf einen weiteren Eingang des jeweiligen Druckreglers 24, 26 geschaltet und der am Ausgang des jeweiligen Druckreglers 24, 26 anstehende Druck erzeugt wiederum ein Steuersignal auf der gegenüberliegenden Seite des jeweiligen Druckreglers 24, 26.

Neben dieser hydraulischen Ansteuerung weist der jeweilige Druckregler 24, 26 auf seiner dem Steuereingang des Proportional-Druckbegrenzungsventiles 40 gegenüberliegenden Seite eine Rückstellfeder in Form einer Druckfeder 44 auf. Des weiteren ist der weitere Eingang des jeweiligen Druckreglers 24, 26 an den das jeweilige Proportional-Druckbegrenzungsventil 40 auf seiner Ausgangsseite angeschlossen ist mit dem Tank T verbunden. Bei der dahingehenden Ausführung erfolgt also die Vorsteuerung des jeweiligen Druckreglers 24, 26 über für sehr kleine Volumenströme ausgelegte Proportional-Druckbegrenzungsventile 40 und die bei einer Arbeitsmaschine zu beherrschenden großen Volumenströme werden über die Drei-Wege-Druckminderventile mit der angesprochenen Sekundärdruckbegrenzung angesteuert.

Die gesamte Regelung aller Funktionen, Lastanpassung und Betriebszustände erfolgt bei der vorstehend bezeichneten Lösung auf der Basis eines nicht näher dargestellten Weg-Mess-Systems für das Antriebsteil 10 in Form eines Hydraulikzylinders 12, der Stromvorgabe für die Druckminderventile und der Funktion sowie des Aufbaus der Druckminderventile selbst, die über in einem Gehäuse 46 frei verschiebbare und mithin einstellbare Ventilkolben realisiert sind. Durch die dahingehende "schwimmende Anordnung" der jeweiligen Ventilkolben 48, ist mithin in Abhängigkeit von der jeweils eingehenden Vorsteuerung die benötigten Öffnungsquerschnitte vorgebbar, so dass es nicht mehr wie im Stand der Technik notwendig ist, Hauptsteuerkolben von Ventilkolben nebst ihren Steuerkanten und Steuerübergängen definitiv geometrisch vorzugeben, und dergestalt paßgenau zu bearbeiten.

Aufgrund des gewählten Ventilsteuerungskonzeptes ist es also bei dem hydraulischen System möglich, auf preiswerte Druckminderventile zurückgreifen zu können, die im übrigen sehr schnell reagieren und somit sehr rasch Ansteuerungsvorgänge für das jeweilige Antriebsteil 10 erlauben. Auch mit dieser gezeigten Lösung ist es möglich, unterschiedliche Arbeitsgerätschaften an der vorderen oder hinteren Hubwerksachse bei Landmaschinen aufzunehmen und je nach Aufgabe des derart aufgenommenen Gerätes (Pflug, Egge, Saatmaschine etc.) ist ein bestimmter Bodendruck oder eine Position für ein optimales Bearbeiten vorgebbar. Mithin ist es möglich, dass die Arbeitsgerätschaft ohne weiteres den Boden-unebenheiten folgen kann, ohne dabei den Toleranzbereich des Bodendruckes zu verlassen, der bekanntermaßen weder abhängig ist vom Gewicht der Arbeitsgerätschaft noch von deren geometrischen Abmessungen.

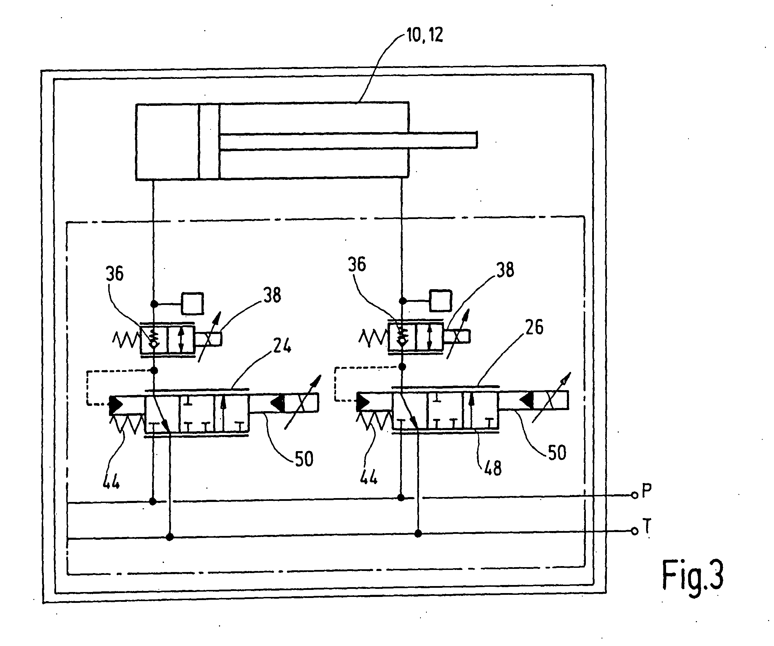

Bei der nunmehr zu beschreibenden erfindungsgemäßen Ausführungsform nach der Fig. 3 werden wiederum die selben Bezugszeichen verwendet, wie bei den Ausführungsformen nach den Fig. 1 und 2, sofern hier die selben Bauteile angesprochen sind. Insofern gilt auch das bereits Gesagte für die erfindungsgemäße Ausführungsform nach der Fig. 3. Des weiteren wird das hydraulische System nach der Fig. 3 nur noch insoweit erläutert, als es sich wesentlich von den vorangehenden Ausführungsbeispielen unterscheidet.

Bei der erfindungsgemäßen Ausführungsform nach der Fig. 3 werden nunmehr proportionale Druckregler 24, 26 eingesetzt, vorzugsweise wieder in der Form von Drei-Wege-Druckminder-Ventilen. Der Ventilkolben 48 ist in der gezeigten Ausgangsstellung diesmal derart geschaltet, dass der Tankanschluß T auf die Ausgangsseite des jeweiligen Druckreglers 24, 26 geschaltet ist. Des weiteren wird an der Ausgangsseite des jeweiligen Druckreglers 24, 26 der Vorsteuerdruck auf die eine Vorsteuerseite des jeweiligen Druckreglers 24, 26 weitergeleitet. Neben den proportionalen Druckreglern 24, 26 ist nunmehr auch die Drossel 38 als proportionale Einstelldrossel mit veränderbarem Öffnungsquerschnitt ausgestaltet. Des weiteren befindet sich im jeweiligen Antriebsstrang 20, 22 ein Druckaufnehmer DA und wiederum werden für eine vollständige Zylinderansteuerung zwei der beschriebenen Regeleinheiten benötigt.

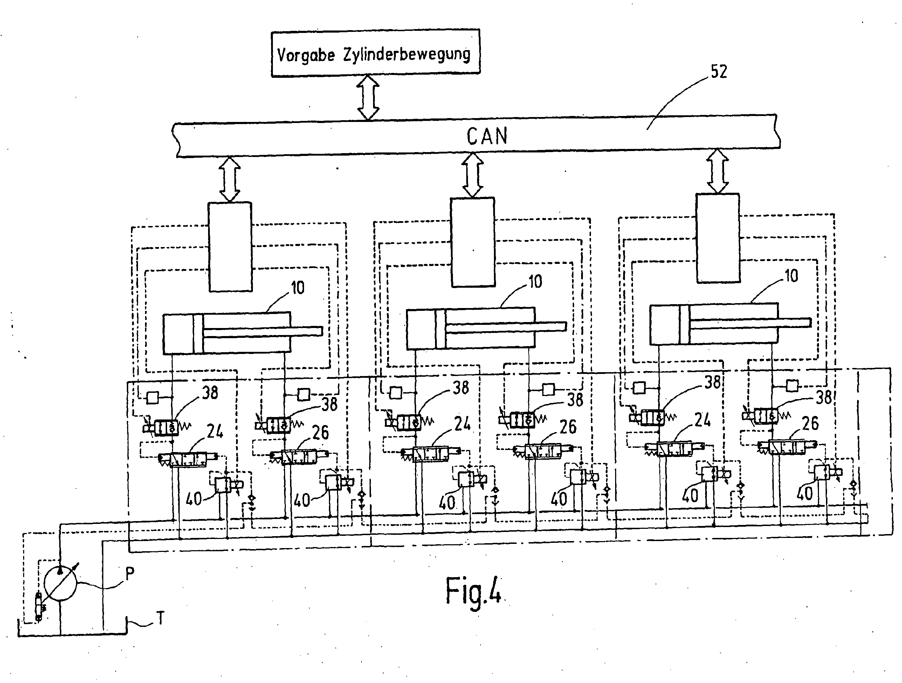

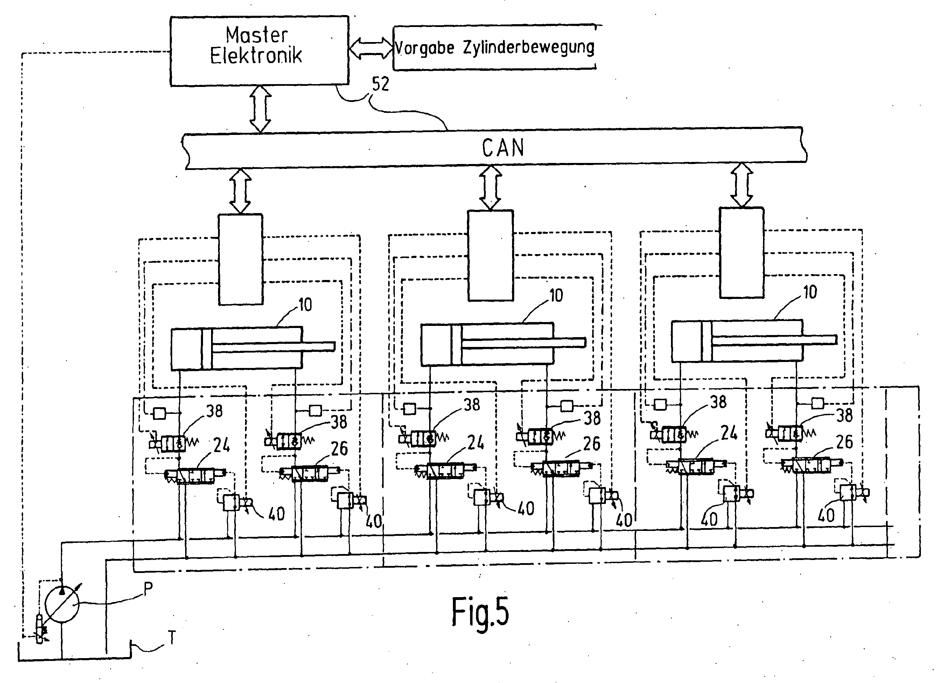

Über den jeweiligen Druckaufnehmer DA wird die momentane Lastsituation am Arbeitszylinder 12 erfaßt, wobei die Einstelldrossel 38 in der Grundstellung wie bereits beschrieben, als leckölfreies Rückschlagventil 36 ausgeführt ist. Der Öffnungsquerschnitt des Ventilkolbens 48 des jeweiligen Druckreglers 24, 26 steigt proportionale zum angelegten Strom, wobei auf der weiteren Vorsteuerseite ein üblicher Schaltmagnet 50 die Ansteuerung vornimmt. Der dahingehende Schaltmagnet 50 kann auch wiederum ersetzt werden durch eine entsprechende hydraulische Vorsteuerung, was anhand der Ausführungsbeispiele nach den Fig. 4 und 5 noch näher beschrieben werden wird. In der gezeigten Grundstellung verbindet der jeweilige Druckregler 24, 26 die Sekundärseite des hydraulischen Systems mit dem Tank. Bei entsprechender Ansteuerung kann dann der Sekundärdruck auf den Druck der proportionalen Vorsteuerung abzüglich der Federkraft (Federdruck) hervorgerufen durch die Rückstellfeder 44, in Form einer Druckfeder eingeregelt werden. Durch diesen Aufbau ist eine Elektronik 52 (Master Elektronik und/oder CAN-Bussystem) in der Lage ein variables Druckgefälle in jeweils beide Richtungen über die Einstelldrossel 38 einzustellen und so eine Stromregelfunktion für beide Strömungsrichtungen zu realisieren. Somit ist eine kontrollierte Zylinderbewegung in beide Richtungen möglich. Durch den Einsatz der Drucksensoren DA für das hydraulische System können zusätzliche Informationen über die Arbeits- oder Lastsituation an dem jeweiligen Arbeitszylinder 12 abgerufen werden. Dergestalt lassen sich dann auch über eine Steuerung Grenz-Lastüberwachungen und Schwingungserkennungen durchführen.

Mit dem erfindungsgemäßen hydraulischen System ist eine aktive Druckregelung für hydraulisch ansteuerbare Antriebsteile mit gegenläufigen Antriebsrichtungen erreicht, so dass sich das erfindungsgemäße hydraulische Systemkonzept, insbesondere für die Front- und Heckhubwerksregelung bei Traktoren eignet, sowie für eine Schneidtischregelung bei Mähdreschern. Dem Grunde nach besteht aber über den jeweiligen Druckregler auch die Möglichkeit im Sinne einer Positions-, Lage-, Geschwindigkeits- oder Druckwerteerfassung, Systemzustände am Antriebsteil zu erfassen und gemäß vorgegebenen Sollwerten einzuregeln.

Die Ausführungsformen nach den Fig. 4 und 5 zeigen den Einsatz des beschriebenen erfindungsgemäßen hydraulischen Systems für den Einsatz bei drei Arbeitszylindern, wobei über einen fahrzeuginternen Datenbus (CAN-Controller Area Network) die elektronische Ansteuerung und der Dateninformationsaustausch, sowohl für den jeweiligen Druckaufnehmer DA, die proportionale Einstelldrossel 38 sowie den proportionalen Druckregler 24, 26 erfolgen, der bei den Ausführungsformen nach den Fig. 4 und 5 auf der einen Steuereingangsseite wiederum vergleichbar der Ausführungsform nach der Fig. 2 von einem Proportional-Druckbegrenzungsventil 40 ansteuerbar ist, dessen Schaltmagnetseite wiederum die elektrischen Steuersignale von dem zentralen CAN-Bussystem erhält. Bei der Ausführungsform nach der Fig. 4 kann dabei unmittelbar die Vorgabe einer Zylinderbewegung auf das CAN-Bussystem aufgeschaltet werden, wohingegen bei der Ausführungsform nach der Fig. 5 noch eine entsprechende Master Elektronik zwischengeschaltet ist. Sofern bei der Ausführungsform nach der Fig. 4 eine hydraulisch geregelte Pumpe P zum Einsatz kommt, ist das Load-Sensing-Signal aus der Vorsteuerung des jeweiligen Druckreglers 24, 26 abzugreifen. Beim Einsatz einer elektronisch geregelten Pumpe P gemäß der Ausführungsform nach der Fig. 5, bei der die Master Elektronik auf die Hydropumpe P einwirkt, kann die gesamte Lastmeldung elektronisch erfolgen, so dass insoweit ein elektronisches Load-Sensing-System realisiert ist.

## Patentansprüche

1. Hydraulisches System mit einem hydraulisch ansteuerbaren Antriebsteil (10) mit zwei gegenläufigen Antriebsrichtungen, wobei für mindestens eine Antriebsrichtung mindestens ein Druckregler (24, 26), insbesondere in Ventilform vorgesehen ist, sowie eine Drossel (38) zwischen dem Druckregler (24, 26) und dem Antriebsteil (10), wobei zur Erkennung des Lastzustandes des Antriebsteiles (10) eine Sensorik vorgesehen ist, in Form eines Druckaufnehmers (DA), der für jede Antriebsrichtung des Antriebsteiles (10) in dem zugeordneten fluidführenden Strang (20, 22) zwischen Drossel (38) und Antriebsteil (10) geschaltet ist, **dadurch gekennzeichnet, dass** der Druckaufnehmer (DA) die momentane Lastsituation am Antriebsteil (10) erfaßt, dass der Druckregler (24, 26) in seiner Grundstellung die Sekundärseite des Systemes mit einem Tankanschluß (T) verbindet, und dass bei Ansteuerung des Druckreglers (24, 26) der Sekundärdruck auf den Druck der proportionalen Vorsteuerung abzüglich der am Ventilkolben (48) des Druckreglers (24, 26) angreifenden Federkraft geregelt ist.

2. Hydraulisches System nach Anspruch 1, **dadurch gekennzeichnet, dass** die Drossel (38) einen fest oder variabel vorgebbaren Verlustwiderstand aufweist, insbesondere dass die Drossel aus einem vorgebbaren Leitungsquerschnitt, dem freien Querschnitt eines Schaltventiles (34) in seiner Durchlass-Stellung oder aus einer Einstelldrossel mit veränderbarem Querschnitt gebildet ist.

3. Hydraulisches System nach Anspruch 1 oder 2, **dadurch gekennzeichnet, dass** der Druckregler (24, 26) aus einem Druckminderventil mit einer Sekundärdruckbegrenzung gebildet ist und dass der Druckregler (24, 26) vorzugsweise ein Dreiwege-Druckminder-Ventil ist.

4. Hydraulisches System nach Anspruch 2 oder 3, **dadurch gekennzeichnet, dass** die Einstelldrossel (38) und der Druckregler (24, 26) proportional ansteuerbar sind und dass die Einstelldrossel (38) in ihrer Grundstellung die Charakteristik eines federbelasteten Rückschlagventiles (36) aufweist.

5. Hydraulisches System nach einem der Ansprüche 1 bis 4, **dadurch gekennzeichnet, dass** zumindest die proportionale Einstelldrossel (38) sowie der Druckaufnehmer (DA) an eine elektronische Steuerung (52) anschließbar sind, die als Sollwert zumindest die Größe des Verfahrweges und die Antriebsrichtung vorgibt.

6. Hydraulisches System nach Anspruch 5, **dadurch gekennzeichnet, dass** beim Einsatz einer hydraulisch geregelten Pumpe (P) ein Load-Sensing Signal (LS) an der Vorsteuerung des jeweiligen Druckreglers (24, 26) abgreifbar ist und dass bei Einsatz einer elektronisch geregelten Pumpe (P) die gesamte Lastmeldung elektronisch erfolgt.

7. Hydraulisches System nach einem der Ansprüche 1 bis 6, **dadurch gekennzeichnet, dass** als ansteuerbares Antriebsteil (10) ein hydraulischer Arbeitszylinder (12) dient.

## Claims

1. Hydraulic system with a hydraulically controllable drive element (10) with two opposing drive directions, in which for at least one drive direction at least one pressure regulator (24, 26), especially in the form of a valve, is provided, and also a throttle (38) between the pressure regulator (24, 26) and the drive element (10), while a sensor is provided to detect the load condition of the drive element (10), in the direction of a pressure transducer (DA), which is connected between throttle (38) and drive element (10) for each drive direction of the drive element in the assigned fluid-carrying train (20, 22), **characterised in that** the pressure transducer (DA) detects the instantaneous load situation at the drive element (10), that the pressure regulator (24, 26) in its basic position connects the secondary side of the system with a tank connection (T), and that when the pressure regulator (24, 26) is controlled, the secondary pressure is adjusted to the pressure of the proportional pilot control minus the spring force acting upon the valve piston (48) of the pressure regulator (24, 26).

2. Hydraulic system according to claim 1, **characterised in that** the throttle (38) has a fixed or variable pre-definable loss resistance, in particular that the throttle is formed by a pre-definable line cross-section, from the free cross-section of a switching valve (34) in its open position or from an adjusting throttle with variable cross-section.

3. Hydraulic system according to claim 1 or 2, **characterised in that** the pressure regulator (24, 26) is formed from a pressure reducing valve with a secondary pressure relief and that the pressure regulator (24, 26) is preferably a three-way pressure reducing valve.

4. Hydraulic system according to claim 2 or 3, **characterised in that** the adjusting throttle (38) and the pressure regulator (24, 26) are proportionally controllable and that the adjusting throttle (38), in its basic position, exhibits the characteristics of a springloaded check valve (36).

5. Hydraulic system according to one of claims 1 to 4, **characterised in that** at least the proportional adjusting throttle (38) and the pressure transducer (DA) can be connected to an electronic controller (52), which as set value specifies at least the value of the distance traversed and the drive direction.

6. Hydraulic system according to claim 5, **characterised in that** when a hydraulically controlled pump (P) is used, a load sensing signal (LS) can be tapped from the pilot control of the respective pressure regulator (24, 26) and that when an electronically controlled pump (P) is used, the complete load message occurs electronically.

7. Hydraulic system according to one of claims 1 to 6, **characterised in that** a hydraulic working cylinder (12) serves as controllable drive element (10).

## Revendications

1. Système hydraulique, comprenant une partie ( 10 ) menante à asservissement hydraulique ayant deux sens d'entraînement opposés, sachant qu'au moins un régulateur ( 24, 26) de pression, en particulier sous la forme d'une soupape, est prévu pour au moins un sens d'entraînement, et comprenant un étranglement ( 38 ) entre le régulateur ( 24, 26 ) de pression et la partie ( 10 ) menante, sachant qu'il est prévu, afin de détecter la situation de charge de la partie ( 10 ) menante, un équipement de détection sous la forme d'un capteur ( DA ) de pression qui est, pour chaque sens d'entraînement de la partie ( 10 ) menante, branché dans la branche ( 20, 22 ) associée conduisant le fluide entre l'étranglement ( 38 ) et la partie ( 10 ) menante, **caractérisé en ce que** le capteur ( DA ) de pression détecte la situation momentanée de charge au niveau de la partie ( 10 ) menante, **en ce que** le régulateur ( 24, 26 ) de pression relie dans sa position de base le côté secondaire du système à un branchement ( T ) de réservoir, et **en ce que**, lorsque le régulateur ( 24, 26 ) de pression est asservi, la pression secondaire est régulée à la pression du pilotage proportionnel déduction faite de la force de ressort agissant sur le piston ( 48 ) de soupape du régulateur ( 24, 26 ) de pression.

2. Système hydraulique suivant la revendication 1, **caractérisé en ce que** l'étranglement ( 38 ) comprend une résistance de perte prescriptible de manière fixe ou variable, en particulier **en ce que** l'étranglement est constitué d'une section de conduite prescriptible, à savoir la section libre d'une soupape ( 34 ) de commutation dans sa position de passage, ou est constitué d'un étranglement réglable ayant une section modifiable.

3. Système hydraulique suivant la revendication 1 ou 2, **caractérisé en ce que** le régulateur ( 24, 26 ) de pression est constitué d'une soupape de réduction de pression ayant une limitation de pression secondaire, et **en ce que** le régulateur ( 24, 26 ) de pression est de préférence une soupape de réduction de pression à trois voies.

4. Système hydraulique suivant la revendication 2 ou 3, **caractérisé en ce que** l'étranglement ( 38 ) réglable et le régulateur ( 24, 26 ) de pression peuvent être asservis de façon proportionnelle, et **en ce que** l'étranglement ( 38 ) réglable possède dans sa position de base la caractéristique d'une soupape ( 36 ) anti-retour sollicitée par ressort.

5. Système hydraulique suivant l'une des revendications 1 à 4, **caractérisé en ce qu'**au moins l'étranglement ( 38 ) réglable proportionnel ainsi que le capteur ( DA ) de pression peuvent être raccordés à une commande ( 52 ) électronique qui prescrit comme consigne au moins le montant de la course de déplacement et le sens d'entraînement.

6. Système hydraulique suivant la revendication 5, **caractérisé en ce que**, si l'on utilise une pompe ( P ) à régulation hydraulique, un signal ( LS ) de détection de charge peut être prélevé au niveau du pilotage du régulateur ( 24, 26 ) de pression respectif, et **en ce que**, si l'on utilise une pompe ( P ) à régulation électronique, l'ensemble de la signalisation de charge s'effectue par voie électronique.

7. Système hydraulique suivant l'une des revendications 1 à 6, **caractérisé en ce qu'**un vérin ( 12 ) hydraulique de travail sert de partie ( 10 ) menante asservissable.
